# Europäisches Patentamt

# European Patent Office

# Office européen des brevets

(19)

(11) Veröffentlichungsnummer: **0 276 310**

**B1**

(12) **EUROPÄISCHE PATENTSCHRIFT**

(45) Veröffentlichungstag der Patentschrift: 23.05.90

(21) Anmeldenummer: 86906035.0

(22) Anmeldetag: 20.06.86

(86) Internationale Anmeldenummer:
PCT/SU86/00064

(87) Internationale Veröffentlichungsnummer:
WO 87/07857 30.12.87 Gazette 87/29

(51) Int. Cl.⁵: **B 23 B 51/00**

(54) **DIAMANTBOHRER ZUR BEARBEITUNG VON HARTEN SPRÖDEN MATERIALIEN.**

(43) Veröffentlichungstag der Anmeldung:
03.08.88 Patentblatt 88/31

(45) Bekanntmachung des Hinweises auf die
Patenterteilung:
23.05.90 Patentblatt 90/21

(84) Benannte Vertragsstaaten:
CH DE FR GB IT LI SE

(56) Entgegenhaltungen:
SU-A- 246 284
SU-A- 365 093
US-A- 3 811 520

Materialy nauchno-tekhnicheskoi konferentsii
Evropeiskikh stran-chlenov SEV i SFRJu
"Sinteticheskie almazy - kljuch k
tekhnicheskomn progressu", 21-24 August 1974,
(Sinteticheskie almazy, Kiev), Sh.T. Frenkel
"Novye almaznye instrumenty dlya sverlenia
otversty v tverdykh nemetallicheskikh
materialakh"; see pages 2,3

(73) Patentinhaber: GRAPONOV, Sergei G.
ul. Malomoskovskaya, 2-203
Moscow, 129164 (SU)
(73) Patentinhaber: ROMANOV, Alexandr I.
Simferopolsky bulvar, 17-56
Moscow, 113452 (SU)
(73) Patentinhaber: VOINOV, Viktor A.
ul. Kerchenskaya, 16-113
Moscow, 113461 (SU)
(73) Patentinhaber: ANIKIN, Viktor K.
ul. Aivazovskogo, 2-16
Moscow, 117593 (SU)

(72) Erfinder: GRAPONOV, Sergei G.
ul. Malomoskovskaya, 2-203
Moscow, 129164 (SU)
Erfinder: ROMANOV, Alexandr I.
Simferopolsky bulvar, 17-56
Moscow, 113452 (SU)
Erfinder: VOINOV, Viktor A.
ul. Kerchenskaya, 16-113
Moscow, 113461 (SU)
Erfinder: ANIKIN, Viktor K.
ul. Aivazovskogo, 2-16
Moscow, 117593 (SU)

**EP 0 276 310 B1**

(56) Entgegenhaltungen:
Vsesojuzny nauchno-issledovatelsky institut
mezhotraslevoi informatsii (VIMI),
informatsionny listok No. 75-0379, 10 April 1975
(10.04.75) (VIMI, Moscow, USSR), "Sverlo
almaznoe"

(74) Vertreter: **Finck, Dieter et al**
**Patentanwälte v. Füner, Ebbinghaus, Finck**
**Mariahilfplatz 2 & 3**
**D-8000 München 90 (DE)**

## Beschreibung

### Technisches Gebiet

Die Erfindung bezieht sich auf ein Schneidwerkzeug zum Bohren von Löchern in schwer spanbaren Werkstoffen und betrifft insbesondere einen Diamantbohrer zur Bearbeitung von harten spröden Werkstoffen, gemäß dem Oberbegriff des Anspruchs.

### Zugrundeliegender Stand der Technik

Bekannt ist ein solches Diamantwerkzeug zum Bohren von Kleinlöchern (siche US—A—3811520), dessen Schneidteil aus einer Diamantfliese ausgeführt ist und eine Krummlinige Längsnut aufweist, deren Tiefe von seiten der Arbeitsstirnfläche des Diamantwerkzeuges größer als sein halber Durchmesser ist. In der Längsnut des Schneidteils ist ein Tragelement aus nichtschleifenden Material angebracht, das entsprechend der Längsnut des Schneidteils gestaltet ist. Dieses Diamantwerkzeug zum Bohren von Kleinlöchern besitzt keine hohe Betriebssicherheit und erforderliche Bearbeitungsgüte, weil der beim Bohren entstehende Bohrkern bricht, indem er sich gegen die Oberfläche des Tragelementes abstützt, was zu einer erhöhten Bruchwahrscheinlichkeit des Diamantwerkzeuges und des Werkstücks führt.

Bekannt ist auch ein Diamantbohrer zur Bearbeitung von harten spröden Werkstoffen (SU-Urheberschein 246 284, Kl. B 23 B 51/00, bekanntgemacht im Blatt "Otkrytia, izobretenia, promyshlennye obraztsy, tovarnye znaki"/"Entdeckungen, Erfindungen, Geschmacksmuster, Warenzeichen"/, Nr. 20, 1969), der einen Körper und einen Schneidteil mit krummliniger Längsnut aufweist, deren Teife von seiten der Arbeitsstirnfläche größer als der halbe Durchmesser des Schneidteils vom Diamantbohrer ist. Bei diesem Diamantbohrer wurde eine Diamantpulverschicht auf den Schneidteil aufgetragen. Während des Bohrens mit diesem Diamantbohrer besitzt dieser wegen des Fehlens eines zylindrischen Abschnitts der Längsnut keine hinreichende Stabilität beim Einschneiden in die Oberfläche eines Werkstücks, wodurch seine hohe Zuverlässigkeit, hohe Maßgenauigkeit der zu bearbeitenden Bohrlöcher und die vorgegebene Bearbeitungsgüte nicht gewährleistet werden.

### Offenbarung der Erfindung

Der Erfindung liegt die Aufgabe zugrunde, einen Diamantbohrer zur Bearbeitung von harten spröden Werkstoffen mit einer solchen konstruktiven Ausführung zu entwickeln, die aufgrund einer Verkleinerung der Berührungsfläche des Diamantbohrers und des Werkstücks die Reibungskräfte an der Schnittstelle und den Druck am Werkstück zu senken vermag, was eine hohe und stabile Schneidfähigkeit des Diamantbohrers bewirkt und somit die Bearbeitungsgenauigkeit von Bohrlöchern, die Betriebssicherheit des Diamantbohrers und die Bearbeitungsgüte erhöht.

Diese Aufgabe wird dadurch gelöst, daß der Körper mit dem aus einem einstückigen diamanthaltigen zylindrischen Schaft ausgeführten Schneidteil des Diamantbohrers verbunden ist, und die Längsnut aus einem zylindrischen und einem toroidalen Abschnitt besteht, die untereinander gekoppelt sind, wobei der zylindrische Abschnitt von seiten der Arbeitsstirnfläche des Diamantbohrers liegt, und die Oberfläche des toroidalen Abschnitts die geometrische Drehachse des Diamantbohrers schneidet und in die zylindrische Mantelfläche des Schneidteils übergeht, wobei die Länge des zylindrischen Abschnitts der Längsnut innerhalb 0,45 D bis 1,0 D, die Maximalbreite der Längsnut innerhalb 0,3 D bis 0,5 D, die Tiefe der Längsnut arbeitsstirnseitig innerhalb 0,6 D bis 0,7 D und die Länge des toroidalen Abschnitts der Längsnut innerhalb 1,5 D bis 3,0 D liegen, worin D den Durchmesser des Schneidteils vom Diamantbohrer bezeichnet.

Durch die Verbindung des Körpers mit dem aus dem einstückigen diamanthaltigen zylindrischen Schaft ausgeführten Schneidteil des Diamantbohrers wird eine hohe Steifigkeit des Diamantbohrers gewährleistet, was zu einer verbesserten Bearbeitungsgüte führt. Somit wird auch eine hohe und stabile Schneidfähigkeit des Diamantbohrers sichergestellt, was eine Erhöhung seiner Betriebssicherheit und die Qualitätsverbesserung der zu bearbeitenden Bohrlöcher begünstigt.

Durch Vorhandensein des zylindrischen Abschnitts in der Längsnut des Diamantbohrers wird ein zügiger Einschnitt in das werkstück bewirkt, eine erhöhte Stabilität des Diamantbohrers beim Berühren mit der zu bearbeitenden Fläche begünstigt und eine verbesserte Bearbeitungsgüte herbeigeführt.

Durch Vorhandensein des toroidalen Abschnitts der Längsnut, dessen Oberfläche die geometrische Drehachse des Diamantbohrers schneidet und in die zylindrische Mantelfläche des Schneidteils vom Diamantbohrer übergeht, wird eine hohe Stabilität des Schneidvorganges aufgrund eines freien Zutritts der Kühlflüssigkeit zur Schnittstelle, eines zügigen Abschleifens der Kuppe des beim Bohren entstandenen Kernes und der Ableitung der Bearbeitungsprodukte von der Schnittstelle gewährleistet. Dadurch werden die Betriebssicherheit des Diamantbohrers erhöht und die Bearbeitungsgüte verbessert.

Dadurch daß die Länge des zylindrischen Abschnitts der Längsnut innerhalb 0,45 D bis 1,0 D liegt, wird eine hohe Stabilität des Diamantbohrers beim Berühren mit der Oberfläche des Werkstücks unter Beibehaltung seiner Steifigkeit gewährleistet. Wenn der zylindrische Abschnitt der Längsnut kleiner als 0,45 D in der Länge ausgeführt ist, senkt die Stabilität des Diamantbohrers beim Berühren mit der Oberfläche des Werkstücks, wodurch seine Betriebssicherheit und die Maßgenauigkeit der zu bearbeitenden Bohrlöcher herabgesetzt werden. Falls der zylindrische Abschnitt der Längsnut mehr als 1,0 D in der Länge mißt, vermindert sich die Festigkeit des einstückigen diamanthaltigen zylindrischen Schaftes, die Zuverlässigkeit des Diamantbohrers, sowie verschlechtert sich die Güte der zu bearbeitenden Bohrlöcher.

Dadurch daß die Maximalbreite der Längsnut innerhalb 0,3 D bis 0,5 D liegt, wird eine stabile Arbeit des Diamantbohrers ohne Festklemmen des Kernes, ohne Bruch des Diamantbohrers und des Werkstücks gewährleistet. Wenn die Längsnut weniger als 0,3 D in der Maximalbreite mißt, erhöht sich die Wahrscheinlichkeit eines Festklemmens vom Kern, eines Bruchs des Diamantbohrers und des Werkstücks, wodurch die Betriebssicherheit des Diamantbohrers herabgesetzt und die Bearbeitungsgüte verschlechtert werden. Wenn die Längsnut mehr als 0,5 D in der Maximalbreite mißt, vermindert sich die Festigkeit des einstückigen diamanthaltigen Schaftes, die Zuverlässigkeit des Diamantbohrers, sowie verschlechtert sich die Güte der zu bearbeitenden Bohrlöcher.

Dadurch daß die Tiefe der Längsnut arbeitsstirnseitig innerhalb 0,6 D bis 0,7 D liegt, word eine hohe Bearbeitungssicherheit unter stabiler Schneidfähigkeit des Diamantbohrers gewährleistet. Wenn die Längsnut von seiten der Arbeitsstirnfläche des Diamantbohrers weniger als 0,6 D in der Tiefe mißt, sinkt die Schneidfähigkeit und die Stabilitat des Diamantbohrers beim Berühren mit der Oberfläche des Werkstücks, was zu einer verminderten Betriebssicherheit und einer schlechteren Güte der zu bearbeitenden Bohrlöcher führt. Wenn die Längsnut von seiten der Arbeitsstirnfläche des Diamantbohrers mehr als 0,7 D in der Tiefe mißt, vermindert sich die Festigkeit des einstückigen diamanthaltigen Schaftes, die Betriebssicherheit des Diamantbohrers, sowie verschlechtert sich die Güte der zu bearbeitenden Bohrlöcher.

Dadurch daß die Länge des toroidalen Abschnitts der Nut innerhalb 1,5 D bis 3,0 D liegt, wird eine hohe Bearbeitungsgüte aufgrund eines zügigen Abschleifens der Kuppe des Kernes unter hoher Steifigkeit des Diamantbohrers sichergestellt. Wenn der toroidale Abschnitt der Nut weniger als 1,5 D in der Länge mißt, erhöht sich die Wahrscheinlichkeit eines Festklemmens vom Kern, sinkt die Zuverlässigkeit des Diamantbohrers und verschlechtert sich die Güte der zu bearbeitenden Bohrlöcher. Wenn der toroidale Abschnitt der Nut des Diamantbohrers mehr als 3,0 D in der Länge mißt, vermindert sich die Stabilität des Diamantbohrers, seine Zuverlässigkeit und die Maßgenauigkeit der zu bearbeitenden Bohrlöcher.

Die vorliegende Erfindung gestattet, die Genauigkeit des Bohrens von Bohrlöchern, die Betriebssicherheit des Diamantbohrers zu erhöhen, sowie die Bearbeitungsgüte zu verbessern, wodurch der Bohraufwand, der Verbrauch an zu bearbeitenden Werkstoffen gesenkt und die Umstellzeit für die Ausrüstung verkürzt werden.

Gekürzte Zeichnungsbeschreibung

Nachstehend wird die Erfindung an Hand eines konkreten Ausführungsbeispiels und der beigefügten Zeichnungen näher erläutert; es zeigen

Fig. 1 eine Gesamtansicht des erfindungsgemäßen Diamantbohrers zur Bearbeitung von harten spröden Werkstoffen, im Längsschnitt;

Fig. 2 einen Schnitt gemäß Linie II—II in Fig. 1, nach der Erfindung.

Bevorzugte Ausführungsform der Erfindung

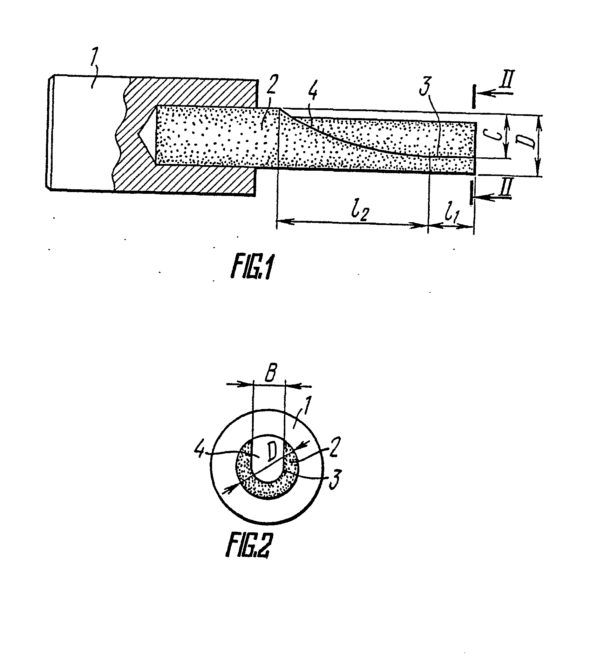

Der Diamantbohrer zur Bearbeitung von harten spröden Werkstoffen enthält einen Körper 1 (Fig. 1), der mit einem aus einem einstückigen diamanthaltigen zylindrischen Schaft bestehenden Schneidteil 2 verbunden ist. Der Schneidteil 2 weist eine krummlinig verlaufende Längsnut auf, welche aus einem zylindrischen Abschnitt 3 und einem toroidalen Abschnitt 4 besteht, die untereinander gekoppelt sind. Der zylindrische Abschnitt 3 liegt von seiten der Arbeitsstirnfläche des Diamantbohrers. Die Oberfläche des toroidalen Abschnitts 4 schneidet die geometrische Drehachse des Diamantbohrers und geht in die zylindrische Mantelfläche des Schneidteils 2 über. Die Länge $l_1$ des zylindrischen Abschnitts 3 der Längsnut liegt innerhalb 0,45 D bis 1,0 D, um eine hohe Stabilität des Diamantbohrers beim Berühren mit der zu bearbeitenden Fläche unter Beibehaltung von hoher Steifigkeit des Diamantbohrers sicherzustellen. D bezeichnet den Durchmesser des Schneidteils 2 vom Diamantbohrer. Zum Erreichen einer stabilen Arbeit des Diamantbohrers, bei welcher der Kern nicht festgeklemmt, der Diamantbohrer und das Werkstück nicht gebrochen werden, liegt die Maximalbreite B (Fig. 2) der Längsnut innerhalb 0,3 D bis 0,5 D. Die Tiefe C (Fig. 1) der Längsnut von seiten der Arbeitsstirnfläche liegt innerhalb 0.6 D bis 0,7 D, um eine verbesserte Bearbeitungsgüte unter stabiler und erhöhter Schneidfähigkeit des Diamantbohrers zu gewährleisten. Die Länge $l_2$ des toroidalen Abschnitts 4 der Längsnut liegt innerhalb 1,5 D bis 3,0 D, um eine verbesserte Bearbeitungsgüte unter erhöhter Steifigkeit des Diamantbohrers zu gewährleisten.

Der Diamantbohrer zur Bearbeitung von harten spröfden Werkstofen wird folgenderweise hergestellt. Ein nach einem der bekannten Verfahren (N. A. Krishtopa, S. P. Radzevich, V. I. Bobko "Obrabotka otversty v kompozitsionnykh i nemetallicheskikh materialakh"/"Bearbeitung von Bohrungen in Verbund- und nichtmetallischen Werkstoffen"/, bekanntgemacht in 1980, Verlag "Tekhnika", Kiew, s. S. 88) hergestellter einstückiger diamanthaltiger zylindrischer Schaft wird im Körper 1 eingespannt, wonach nacheinander die Oberfläche des Schaftes bis zum Erreichen des Solldurchmessers D vom Schneidteil 2 bearbeitet und darin eine krummlinig verlaufende Längsnut eingearbeitet wird.

Der auf diese Weise hergestellte Diamantbohrer zur Bearbeitung von harten spröden Werkstofen ist betriebsbereit. Die Bearbeitung eines (nicht dargestellten) Werkstücks aus Keramik, Vitrokeram, Glas Saphir, Lithiumniobat und sonstigen harten spröden Werkstoffen wird wie folgt vorgenommen.

Der rotierende Diamantbohrer zur Bearbeitung

4

von harten spröden Werkstoffen wird unter Zuführung der Kühlflüssigkeit an die Schnittstelle in Berührung mit dem Werkstück gebracht. Beim Berühren des Schneidteils 2 vom Diamantbohrer mit der Oberfläche des Werkstücks bildet sich innerhalb des zylindrischen Abschnitts 3 der Längsnut ein Kern, der eine hohe Stabilität des Diamantbohrers im anfänglichen Zeitpunkt seiner Arbeit gewährleistet. Durch die Ausführung des Schneidteils 2 vom Diamantbohrer aus einem einstückigen diamanthaltigen zylindrischen Schaft wird dessen hohe Steifigkeit gesichert sowie eine erhöhte Stabilität des Diamantbohrers im anfänglichen Zeitpunkt seiner Arbeit begünstigt.

In dem Maße, wie der Diamantbohrer in das Werkstück einschneidet, wird der Oberteil des Kernes durch die Oberfläche des toroidalen Abschnitts 4 der Längsnut sanft abgeschliffen, ohne daß der Kern in dieser Nut festgeklemmt, sowie der Diamantbohrer und das Werkstück gebrochen werden. Die Stabilität des Schneidvorganges wird in dieser Zeitspanne durch den freien Zutritt der Kühlflüssigkeit zur Schnittstelle und Ableitung der Bearbeitungsprodukte erreicht. Dabei werden die Reibungskräfte an der Schnittstelle und der Druck am Werkstück aufgrund der Verkleinerung der Berührungsfläche des Diamantbohrers und des Werkstücks vermindert, wodurch eine hohe und stabile Schneidfähigkeit des Diamantbohrers sichergestellt und somit die Genauigkeit des Bohrens, die Betriebssicherheit des Diamantbohrers erhöht sowie die Bearbeitungsgüte verbessert werden. Das Bohren erfolgt solange, bis die Arbeitsstirn des Diamantbohrers über die Öberfläche des Werkstücks hinausgegangen ist. Dank der hohen Zuverlässigkeit des Diamantbohrers besteht die Möglichkeit, eine große Anzahl von Löchern an einem Werkstück zu bohren.

Die vorliegende Erfindung gestattet also, die Genauigkeit des Bohrens und die Betriebssicherheit des Diamantbohrers zu erhöhen sowie die Bearbeitungsgüte zu verbessern.

Gewerbliche Anwendbarkeit

Die Erfindung kann bei der Bearbeitung von Bohrlöchern in Halbleiter- und Mikroelektronikbauelementen, in Bauteilen von Hochenergieanlagen, Flugzeugen, Strahlenoptik und in Erzeugnissen der Schmuckindustrie ausgenutzt werden.

**Patentanspruch**

Diamantbohrer zur Bearbeitung von harten spröden Werkstoffen, der einen Körper (1), einen Schneidteil (2) mit einer krummlinigen Längsnut enthält, deren Tiefe (C) arbeitsstirnseitig größer als der halbe Durchmesser (D) des Schneidteils (2) des Diamantbohrers ist, dadurch gekennzeichnet, daß der Körper (1) mit dem aus einem einstückigen diamanthaltigen zylindrischen Schaft ausgeführten Schneidteil (2) des Diamantbohrers verbunden ist, daß die Längsnut aus einem zylindrischen Abschnitt (3) und einem toroidalen Abschnitt (4) besteht, die untereinander gekoppelt sind, wobei der zylindrische Abschnitt (3) auf der Seite der Arbeitsstirnfläche des Diamantbohrers liegt, und daß die Oberfläche des toroidalen Abschnitts (4) die geometrische Drehachse des Diamantbohrers schneidet und in die zylindrische Mantelfläche des Schneidteils (2) übergeht, wobei die Länge ($l_1$) des zylindrischen Abschnitts (3) der Längsnut innerhalb 0,45 D bis 1,0 D, die Maximalbreite (B) der Längsnut innerhalb 0,3 D bis 0,5 D, die Tiefe (C) der Längsnut arbeitsstirnseitig innerhalb 0,6 D bis 0,7 D und die Länge ($l_2$) des toroidalen Abschnitts (4) der Längsnut innerhalb 1,5 bis 3,0 D liegen, worin (D) den Durchmesser des Schneidteils vom Diamantbohrer bezeichnet.

**Revendication**

Foret à diamant pour l'usinage de matériaux durs friables, comportant un corps (1), une partie de coupe (2) avec une rainure longitudinale d'une forme curviligne, dont la profondeur (C), mesurée du côte de la face en bout active est superieure à la moitié du diamètre (D) de la partie de coupe (2) du foret à diamant, caractérisé en ce que le corps (1) est lié à la partie de coupe (2) du foret à diamant, partie réalisée à partir d'une tige cylindrique fabriquée entièrement d'un matériau diamanté et en ce que la rainure longitudinale est formée par tronçon cylindrique (3) et un tronçon toroidal (4) conjugués entre eux, en ce que le tronçon cylindrique (3) est disposé du côté de la face en bout active du foret à diamant, en ce que la surface du tronçon toroidal (4) traverse l'axe géometrique de la rotation du foret à diamant et se transforme en surface cylindrique latérale de la partie de coupe (2), la longueur ($l_1$) du tronçon cylindrique (3) de la rainure longitudinale etant de 0,45 D à 1,0, la largeur maximale (B) de la rainure longitudinale etant comprise entre 0,3 D et 0,5 D, la profondeur (C) de la rainure longitudinale mesurée du côte de la face active étant comprise entre 0,6 D et 0,7 D alors que la longueur ($l_2$) du tronçon toroidal (4) de la rainure longitudinale de 0,5 D à 3,0 D, où D est le diamètre de la partie de coupe du foret à diamant.

**Claim**

A diamond drill for machining hard brittle materials comprising a housing (1), a cutting portion (2) with a curvilinear groove the depth (C) of which at the side of a working end of the drill is greater than half the diameter (D) of the cutting portion (2) of the diamond drill, characterized in that the housing (1) is connected to the cutting portion (2) of the diamond drill made from a one-piece diamond-containing cylindrical rod, whereas the longitudinal groove is defined by interconnected cylindrical section (3) and toroidal section (4), the cylindrical section (3) being disposed at the side of the working end of the diamond drill, the surface of the toroidal section (4) intersecting the geometrical axis of rotation of the diamond drill and extends into a side cylindrical surface of the cutting portion (2), the length ($l_1$) of the cylindrical section (3) of the longitudinal groove ranges from 0.45 D to 1.0 D, the maximum width (B) of the longitudinal groove ranging from 0.3 D to 0.5 D, the depth (C) of the longitudinal groove at the side of the working end ranging from 0.6 D to 0.7 D, whereas the length ($l_2$) of the toroidal section (4) of the longitudinal groove ranges from 1.5 D to 3.0 D, where D is the diameter of the cutting portion of the diamond drill.

EP 0 276 310 B1

FIG.1

FIG.2

1